# EUROPEAN PATENT APPLICATION

(11) **EP 3 364 293 A1**
(43) Date of publication of application: **22.08.2018**
(21) Application number: 17187831.7
(22) Date of filing: 24.08.2017
(51) Int. Cl.: G06F 9/44

(54) **DEVICE AND CONTROL METHOD**

(30) Priority: 17.02.2017 JP 2017028314
(71) Applicant: KABUSHIKI KAISHA TOSHIBA, Minato-ku Tokyo 105-8001 (JP)
(72) Inventor: SHIRAKAWA, Yuta, Tokyo, 105-8001 (JP); KOZAKAYA, Tatsuo, Tokyo, 105-8001 (JP); KUBOTA, Susumu, Tokyo, 105-8001 (JP); ITO, Satoshi, Tokyo, 105-8001 (JP); PHAM, Quoc Viet, Tokyo, 105-8001 (JP)
(74) Representative: Moreland, David

(57) **Abstract**

According to an arrangement, a device (100) includes an output control unit (5). When time taken by a user to carry out first behavior is equal to or more than a first threshold, or when number of times the first behavior is repeated is equal to or more than a second threshold, the output control unit (5) outputs first guidance to lead the user to first expected behavior that is behavior the user is expected to carry out subsequent to the first behavior. When the time taken to carry out the first behavior is less than the first threshold, or when the number of times the first behavior is repeated is less than the second threshold, the output control unit (5) omits the first guidance to lead the user to the first expected behavior or outputs second guidance that is simpler than the first guidance.

## Description

### FIELD

The present disclosure relates to a device and a control method.

### BACKGROUND

In a device such as an automatic ticket machine that is used by a user according to a prescribed procedure, there has been known a device that outputs voice and the like to guide the user of the procedure. For example, there has been known a behavior recognition automatic ticket machine that recognizes the user's behavior using image processing and that guides the user corresponding to the user's behavior.

However, in the conventional technology, it has been difficult to prevent guidance that may place a psychological burden on the user. For example, there is a risk of excessive guidance when the user's familiarity with the operation of the device is not taken into consideration.

### BRIEF DESCRIPTION OF THE DRAWINGS

FIG. 1 is a diagram illustrating an example of a hardware configuration of a device of a first arrangement;
FIG. 2 is a diagram illustrating an example of a functional configuration of the device of the first arrangement;
FIG. 3 is a flowchart illustrating an operational example of the device of the first arrangement;
FIG. 4 is a diagram illustrating an example of a functional configuration of a device of a second arrangement;
FIG. 5 is a flowchart illustrating an operational example of the device of the second arrangement;
FIG. 6A is a diagram illustrating an example of a problem (when skill level is high) that is solved by the second arrangement;
FIG. 6B is a diagram illustrating an example of a problem (when skill level is low) that is solved by the second arrangement;
FIG. 7 is a diagram illustrating an example of a hardware configuration of a device of a third arrangement;
FIG. 8 is a diagram illustrating an example of a functional configuration of the device of the third arrangement; and
FIG. 9 is a flowchart illustrating an operational example of the device of the third arrangement.

### DETAILED DESCRIPTION

According to an arrangement, a device includes an output control unit. When time taken by a user to carry out first behavior is equal to or more than a first threshold, or when number of times the first behavior is repeated is equal to or more than a second threshold, the output control unit outputs first guidance to lead the user to first expected behavior that is behavior the user is expected to carry out subsequent to the first behavior. When the time taken to carry out the first behavior is less than the first threshold, or when the number of times the first behavior is repeated is less than the second threshold, the output control unit omits the first guidance to lead the user to the first expected behavior or outputs second guidance that is simpler than the first guidance.

Hereinafter, arrangements of a device, a control method, and a computer program will be described in detail with reference to the accompanying drawings.

### First Arrangement

First, an example of a hardware configuration of a device 100 of a first arrangement will be described.

### Example of Hardware Configuration

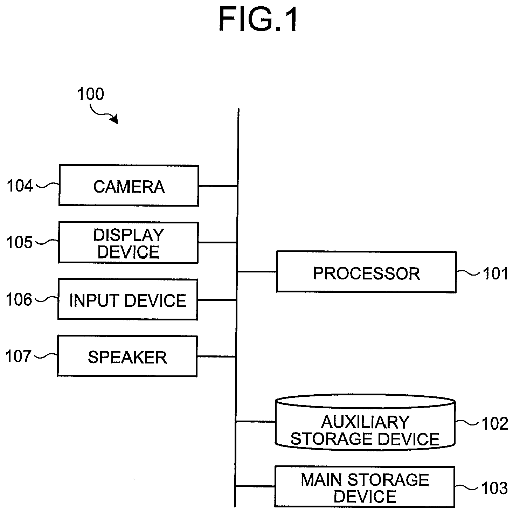

FIG. 1 is a diagram illustrating an example of a hardware configuration of the device 100 of the first arrangement. The device 100 of the first arrangement includes a processor 101, an auxiliary storage device 102, a main storage device 103, a camera 104, a display device 105, an input device 106, and a speaker 107. The device 100 may be any device. For example, the device 100 may be an automatic ticket machine.

The processor 101 reads out a computer program from a storage medium such as the auxiliary storage device 102 and executes the computer program.

The auxiliary storage device 102 stores therein information such as a computer program. The auxiliary storage device 102 may be any device. For example, the auxiliary storage device 102 may be a hard disk drive (HDD). The main storage device 103 is a storage area used as a work area by the processor 101.

The camera 104 acquires a plurality of images in time series, by taking images of a user of the device 100. The camera 104 may be any device. For example, the camera 104 may be a visible light camera and a depth image camera. The camera 104 is installed at a location where the camera 104 can take images of the action taken by the user who is using the device 100. The camera 104 continuously takes images of the action taken by the user, from when the user starts using the device 100 until the user finishes using the device 100.

The device 100 may include a plurality of the cameras 104. When the device 100 includes the cameras 104, the cameras 104 take images of the user from different locations and at different angles, to thereby take images of the front, back, hands, and the like of the user, for example.

Moreover, when the depth image camera is used as the camera 104, the action taken by the user of the device 100 can be taken as an image including depth information.

The display device 105 displays information that is offered to the user of the device 100 and the like. The display device 105 may be any device. For example, the display device 105 may be a liquid crystal display. The input device 106 receives an operational input from the user of the device 100. For example, the input device 106 may be a hardware key.

The display device 105 and the input device 106 may also be a liquid crystal touch panel or the like that has both display function and input function.

The speaker 107 outputs voice guidance and the like to the user of the device 100.

Next, an example of a functional configuration of the device 100 of the first arrangement will be described.

### Example of Functional Configuration

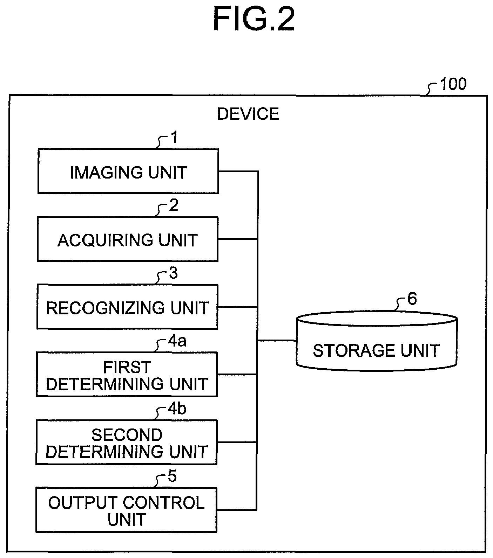

FIG. 2 is a diagram illustrating an example of a functional configuration of the device 100 of the first arrangement. The device 100 of the first arrangement includes an imaging unit 1, an acquiring unit 2, a recognizing unit 3, a first determining unit 4a, a second determining unit 4b, an output control unit 5, and a storage unit 6.

### Outline of Operation

The imaging unit 1 acquires images in time series, by taking images of the user of the device 100. For example, the imaging unit 1 may be implemented by the camera 104.

Upon acquiring the images taken by the imaging unit 1, the acquiring unit 2 supplies the images to the recognizing unit 3, the first determining unit 4a, and the second determining unit 4b. For example, the acquiring unit 2 may be implemented using a computer program executed by the processor 101. Moreover, for example, the acquiring unit 2 may be implemented by hardware such as an integrated circuit (IC).

Upon receiving the images from the acquiring unit 2, the recognizing unit 3 recognizes the user's behavior from the images. The recognizing unit 3 supplies behavior information indicating the recognized behavior to the first determining unit 4a and the second determining unit 4b. For example, the recognizing unit 3 may be implemented using a computer program executed by the processor 101. Moreover, for example, the recognizing unit 3 may be implemented by hardware such as the IC.

Upon receiving the images from the acquiring unit 2 and receiving the behavior information from the recognizing unit 3, the first determining unit 4a determines the skill level of the user, from at least one of the images and the behavior information. The data format for the skill level may be any format. For example, the skill level may be a numerical value indicating the degree of skill level.

For example, the skill level may be indicated by numerical values from 1 to 10. In this case, for example, the initial value of the skill level may be set to 5, and the first determining unit 4a may determine the skill level of the user, by adding or subtracting the skill level according to the user's behavior.

Moreover, for example, the skill level may be expressed by binary values (0: low and 1: high).

The first determining unit 4a supplies skill level information indicating the determined skill level, to the second determining unit 4b.

Upon receiving the behavior information from the recognizing unit 3, and receiving the skill level information from the first determining unit 4a, the second determining unit 4b determines guidance to be output, from the behavior information and the skill level information. The second determining unit 4b supplies guidance information indicating the determined guidance, to the output control unit 5.

For example, the first determining unit 4a and the second determining unit 4b may be implemented using a computer program executed by the processor 101. Moreover, for example, the first determining unit 4a and the second determining unit 4b may be implemented by hardware such as the IC. Moreover, the first determining unit 4a and the second determining unit 4b may be implemented using a single functional block.

Upon receiving the guidance information from the second determining unit 4b, the output control unit 5 outputs the guidance information. For example, the output control unit 5 may be implemented using a computer program executed by the processor 101. Moreover, for example, the output control unit 5 may be implemented by hardware such as the IC.

The storage unit 6 stores therein information. For example, the storage unit 6 may be implemented by the auxiliary storage device 102 and the main storage device 103. For example, the information to be stored in the storage unit 6 is guidance information in which a set of user's behavior and skill level is associated with the guidance for the device 100.

The guidance information is formed so that the guidance for the device 100 is retrieved, using the set of behavior and skill level as a search key. Hence, even when the recognizing unit 3 recognizes the behaviors to be the same, if the skill levels are different, a different guidance will be retrieved. Moreover, the guidance for the device 100 that is stored in the guidance information is not limited to guidance such as sound to be output and a text to be output. For example, the guidance for the device 100 that is to be stored in the guidance information may also be information on operation for helping the user with a skill level of less than a threshold (fourth threshold). For example, the operation for helping the user may be "call a person in charge" and the like. For example, the output control unit 5 calls a person in charge, by notifying the other device such as a terminal used by the person in charge, through a network. Moreover, for example, the guidance for the device 100 that is stored in the guidance information may be information on operation that does not obstruct the operation performed by the user with a skill level of equal to or more than a threshold. For example, the operation that does not obstruct the operation performed by the user may be "not outputting guidance".

The data format of the guidance information may be any format. For example, the guidance information may be divided into database that stores therein behaviors and types of guidance, and database that stores therein sets of skill levels and types of guidance as well as the guidance for the device 100.

### Example of Operational Method

Next, the operation performed by the device of the first arrangement will be described in detail with reference to a flowchart.

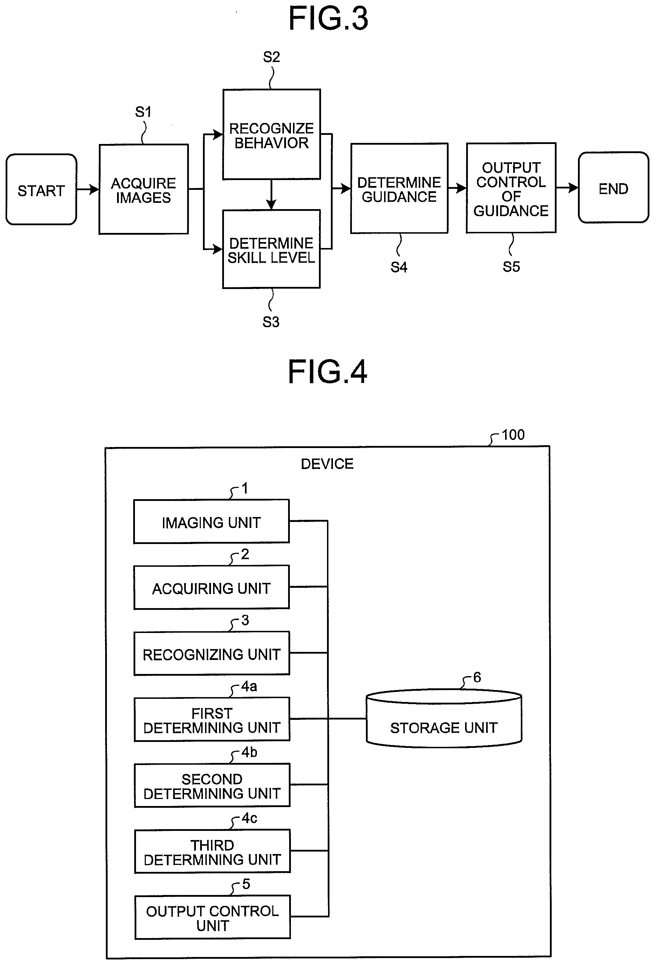

FIG. 3 is a flowchart illustrating an operational example of the device 100 of the first arrangement. First, the acquiring unit 2 acquires images taken by the imaging unit 1 (step S1).

Next, the recognizing unit 3 recognizes the user's behavior from the images obtained through the process at step S1 (step S2). More specifically, the recognizing unit 3 extracts a feature amount of each frame of an image, and a feature amount specified by the preceding and subsequent frames.

For example, the feature vector of each frame includes coordinate information in an image of the characteristic parts of the user's body. The coordinate information indicates points on a plane or in space. For example, the characteristic part of the user's body includes a part of the body that is detected as an edge in an image, such as an eye of the user. Moreover, for example, the feature vector of each frame includes information on appearance in an image that is specified by gradient information in the image.

The feature vector specified by the preceding and subsequent frames is a feature indicating the movement of the user included in the preceding and subsequent frames.

Next, the recognizing unit 3 recognizes the user's behavior using a dynamics i.e. what are the trajectories of the feature vector over time. More specifically, for example, the recognizing unit 3 recognizes the most plausible behavior, by comparing the dynamics in the extracted feature vector with a model that is prepared in advance to recognize the behavior. Moreover, for example, the recognizing unit 3 compares the dynamics in the extracted feature vector with a change pattern of a predetermined feature vector. The recognizing unit 3 then specifies the change pattern of the feature vector that is closest to the dynamics in the extracted feature vector. The recognizing unit 3 then recognizes the behavior pattern that is associated in advance with the change pattern of the specified feature vector, as the user's behavior. For example, the behavior pattern may be "insert a coin" and "touching the liquid crystal touch panel".

Moreover, the recognizing unit 3 recognizes the series of behaviors, using a plurality of behavior patterns that are recognized in time series. For example, information indicating the series of behaviors includes time between the behavior of a user and the subsequent behavior of the user. Moreover, for example, the information indicating the series of behaviors includes a set of behavior of a user and the subsequent behavior of the user.

Next, the first determining unit 4a determines the skill level of the user, from at least one of the images acquired through the process at step S1, and the behavior and the series of behaviors that are recognized through the process at step S2 (step S3).

### Example of Determining Skill Level

A method of determining the skill level may be any method. Hereinafter, the method of determining the skill level will be described.

For example, the first determining unit 4a determines the skill level, by performing regression and classification on the skill level of the user and the like, by extracting the feature vector described above from the images and using the dynamics in the feature vector.

Moreover, for example, the first determining unit 4a determines the skill level, by performing regression and classification on the skill level of the user and the like, using the behavior and the series of behaviors that are recognized by the recognizing unit 3. More specifically, the first determining unit 4a performs regression and classification on the skill level of the user, using the relation in time length between the time taken to carry out each behavior and a predetermined time set in advance for each behavior. Moreover, for example, the first determining unit 4a performs regression and classification on the skill level of the user, using the relation in time length between an interval between the series of behaviors and a predetermined time set in advance for each of the series. Moreover, for example, the first determining unit 4a performs regression and classification on the skill level of the user, using the number of times each behavior is repeated.

The predetermined time described above may not be determined according to the behavior and the series of behaviors. For example, the predetermined time described above may be uniformly determined. Moreover, for example, the predetermined time described above may be adjusted according to the skill level of the user that is decided up to the present time.

Moreover, for example, when the time taken to carry out first behavior is equal to or more than a threshold (first threshold), the first determining unit 4a subtracts a certain value from the skill level of the user. For example, the certain value may be one. On the contrary, when the time taken to carry out the first behavior is less than the threshold (first threshold), the first determining unit 4a adds a certain value to the skill level of the user.

Moreover, for example, when the number of times the first behavior is repeated is equal to or more than a threshold (second threshold), the first determining unit 4a subtracts a certain value from the skill level of the user. On the contrary, when the number of times the first behavior is repeated is less than the threshold (second threshold), the first determining unit 4a adds a certain value to the skill level of the user.

Moreover, for example, when the time taken to carry out the first behavior is equal to or more than the threshold (first threshold), or when the number of times the first behavior is repeated is equal to or more than the threshold (second threshold), the first determining unit 4a determines the skill level to have a value less than a threshold (third threshold).

Moreover, for example, the first determining unit 4a sets the skill level to a smaller value, with an increase in time between the first behavior and second behavior that is behavior carried out by the user subsequent to the first behavior. For example, the first determining unit 4a increases a subtraction value of the skill level of the user, with an increase in time between the first behavior and the second behavior.

The first determining unit 4a may determine one or both of the threshold for time (first threshold) and the threshold for the number of times (second threshold).

Next, the second determining unit 4b determines the guidance for the device 100 that is to be output from the output control unit 5, from the behavior recognized through the process at step S2 and the skill level determined through the process at step S3 (step S4). More specifically, the second determining unit 4b determines the guidance for the device 100 that is retrieved from the guidance information described above, by using the set of behavior and skill level as a search key, as the guidance for the device 100 to be output from the output control unit 5.

Next, the output control unit 5 controls the output of the guidance that is determined by the second determining unit 4b (step S5). For example, the output control unit 5 outputs the guidance to the display device 105 and the speaker 107.

For example, when the skill level after the first behavior is carried out is less than the threshold (third threshold), the output control unit 5 outputs first guidance to lead the user to first expected behavior that is behavior the user is expected to carry out subsequent to the first behavior. When the skill level is equal to or more than the threshold (third threshold), the output control unit 5 omits the guidance to lead the user to the first expected behavior, or outputs second guidance that is simpler than the first guidance.

For example, when the first behavior is "pressing the receipt issuing button", the first expected behavior is to "take the receipt". In this case, for example, the first guidance is "please take your receipt from the output port located at the right bottom of the screen", and for example, the second guidance is "please take your receipt", "please don't forget to take your receipt", or the like.

Moreover, for example, when the skill level after the second behavior is carried out is less than the threshold (third threshold), the output control unit 5 outputs third guidance to lead the user to second expected behavior that is behavior the user is expected to carry out subsequent to the second behavior. When the skill level is equal to or more than the threshold (third threshold), the output control unit 5 omits the guidance to lead the user to the second expected behavior, or outputs fourth guidance that is simpler than the third guidance.

In FIG. 3 described above, the second determining unit 4b determines the guidance for the device 100 based on the behavior recognized by the recognizing unit 3 through the process at step S2 and the skill level determined by the first determining unit 4a through the process at step S3. However, the second determining unit 4b may determine the guidance for the device 100 only based on the behavior recognized by the recognizing unit 3.

The recognizing unit 3 may recognize the user's behavior, not only by the images taken by the camera 104, but also by using an operational input acquired through the input device 106 and the like. For example, the recognizing unit 3 may also recognize that the user's behavior is "pressing the receipt issuing button", when the receipt issuing button is pressed.

As described above, in the device 100 of the first arrangement, when the time taken to carry out the first behavior is equal to or more than the first threshold, or when the number of times the first behavior is repeated is equal to or more than the second threshold, the output control unit 5 outputs the first guidance to lead the user to the first expected behavior that is behavior the user is expected to carry out subsequent to the first behavior. When the time taken to carry out the first behavior is less than the first threshold, or when the number of times the first behavior is repeated is less than the second threshold, the output control unit 5 omits the guidance to lead the user to the first expected behavior, or outputs the second guidance that is simpler than the first guidance.

Consequently, with the device 100 of the first arrangement, it is possible to control the guidance for the device 100 according to the skill level of the user. More specifically, with the device 100 of the first arrangement, it is possible to carry out the most appropriate guidance according to the usage status of the device 100 by the user, and the skill level of the user. Consequently, it is possible to prevent the guidance that may place a psychological burden on the user.

### Second Arrangement

Next, a second arrangement will be described. In the second arrangement, the same description as that in the first arrangement will be omitted, and different points from the first arrangement will be described. In the second arrangement, the skill level is further determined based on a deviation indicating whether the response of the user at the second time is desirable as a response to the guidance that has been offered to the user at the first time.

The first difference of the second arrangement from the first arrangement is that the deviation is used to determine the skill level at the second time. It is to be noted that the second time is later than the first time. The interval between the first time and the second time may be any interval.

The second difference of the second arrangement from the first arrangement is that the expected behavior that is behavior the user is expected to carry out according to the guidance for the device 100 included in the guidance information described above, is also stored in an associated manner. In other words, in the guidance information of the second arrangement, the behavior, the skill level, the guidance, and the expected behavior are stored in an associated manner.

### Example of Functional Configuration

FIG. 4 is a diagram illustrating an example of a functional configuration of the device 100 of a second arrangement. The device 100 of the second arrangement includes the imaging unit 1, the acquiring unit 2, the recognizing unit 3, the first determining unit 4a, the second determining unit 4b, a third determining unit 4c, the output control unit 5, and the storage unit 6. In the device 100 of the second arrangement, the third determining unit 4c is further added to the functional configuration of the device 100 of the first arrangement.

For example, the third determining unit 4c may be implemented using a computer program executed by the processor 101. Moreover, for example, the third determining unit 4c may be implemented by hardware such as the IC. Moreover, the first determining unit 4a, the second determining unit 4b, and the third determining unit 4c may be implemented using a single functional block.

The third determining unit 4c determines a deviation between the first expected behavior that is behavior the user is expected to carry out subsequent to the first behavior and the second behavior. The first expected behavior is expected behavior associated with the first behavior that is included in the guidance information described above. The method of determining the deviation may be any method. For example, the third determining unit 4c determines the deviation from a difference between the feature amount that indicates the first behavior described above, and the feature amount indicating the first expected behavior described above.

The second determining unit 4b further determines the skill level of the user based on the deviation determined by the third determining unit 4c. For example, the second determining unit 4b sets the skill level to a smaller value with an increase in the deviation.

### Example of Operational Method

Next, the operation performed by the device of the second arrangement will be described in detail with reference to a flowchart.

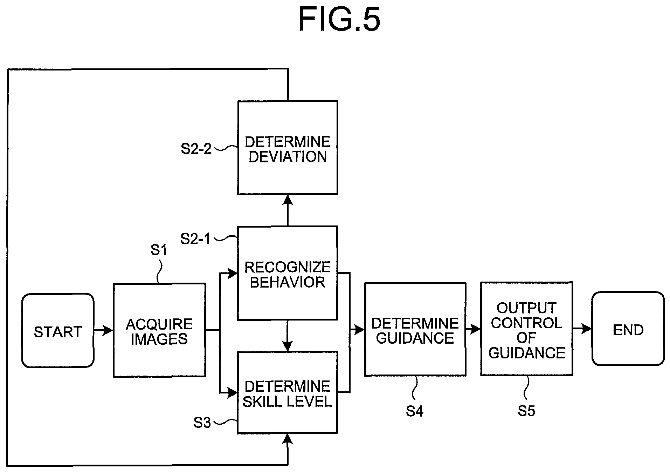

FIG. 5 is a flowchart illustrating an operational example of the device 100 of the second arrangement. In FIG. 5, the first behavior that is carried out at the first time is behavior that is first recognized by the recognizing unit 3.

### Operation on First Behavior at Start of Use

When the first behavior that is carried out at the first time is the behavior first recognized by the recognizing unit 3, no behavior has taken place prior to the first behavior. Thus, the third determining unit 4c does not perform a process at step S2-2. Because the operation on the first behavior at the start of use is the same as the operation of the device 100 in the first arrangement (see FIG. 3), the explanation thereof will be omitted.

### Operation on Second Behavior

Next, an operation on the second behavior that is carried out by the user subsequent to the first behavior will be described. First, the acquiring unit 2 acquires images taken by the imaging unit 1 (step S1).

Next, the recognizing unit 3 recognizes the second behavior of the user, from the images acquired through the process at step S1 (step S2-1).

Next, the third determining unit 4c determines the deviation between the first expected behavior that is behavior the user is expected to carry out subsequent to the first behavior, and the second behavior that is recognized through the process at step S2-1 (step S2-2). It is to be noted that the third determining unit 4c specifies the first expected behavior, by acquiring the expected behavior associated with the first guidance that is determined through the process on the first behavior performed at the first time, from the guidance information described above.

Next, the first determining unit 4a determines the skill level of the user, from at least one of the images acquired through the process at step S1, the behavior and the series of behaviors that are recognized through the process at step S2-1, and the deviation determined through the process at step S2-2 (step S3). For example, the first determining unit 4a sets the skill level to a smaller value, with an increase in the deviation between the first expected behavior and the second behavior.

Because the processes at step S4 and step S5 are the same as those of the operational method of the device 100 in the first arrangement (see FIG. 3), the explanation thereof will be omitted.

Because the operation on the user's behavior of third behavior and thereafter that is carried out subsequent to the second behavior is the same as the operation on the second behavior described above, the explanation thereof will be omitted.

As described above, in the device 100 of the arrangement, the first determining unit 4a determines the skill level to have a smaller value, with an increase in the deviation between the first expected behavior and the second behavior.

In the second arrangement, the behavior of the user at the second time in response to the guidance at the first time can be taken into consideration to determine the skill level at the second time. Consequently, it is possible to control the guidance in which the user's behavior in response to the guidance is taken into consideration.

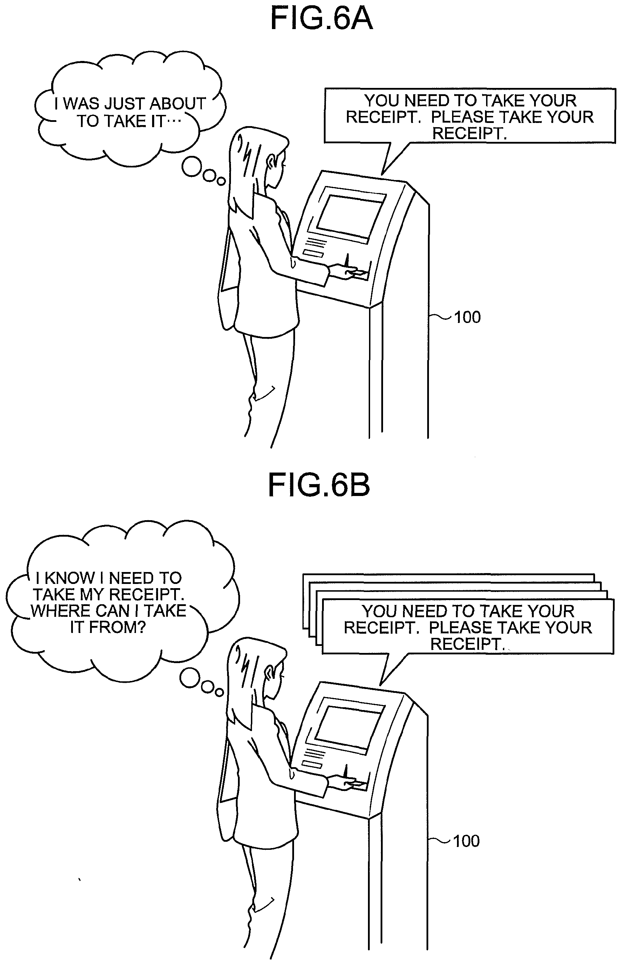

For example, a problem illustrated in FIG. 6A may be considered as a problem to be solved by the second arrangement. The user with a high skill level who has completed the purchasing procedure using the device 100 recognizes in advance that the next behavior to be taken is an action of "taking the receipt". Thus, the user starts the action of "taking the receipt", immediately after the end of use announcement takes place. In this case, when the device 100 outputs guidance such as an announcement for "prompting the user to take the receipt", there is a possibility of placing a psychological burden on the user. This is not desirable. With the second arrangement, when the action of "taking the receipt" is confirmed as the response of the user to the "end of use" announcement, it is possible to control the guidance so as to cancel the announcement for "prompting the user to take the receipt". Consequently, with the device 100 of the second arrangement, it is possible to prevent the guidance that may place a psychological burden on the user.

Moreover, for example, a problem illustrated in FIG. 6B may be considered as a problem to be solved by the second arrangement. It is assumed that the user who has been guided by the announcement for "prompting the user to take the receipt" or the like by the device 100, starts the action of "taking the receipt". However, it is useless to repeat the announcement to the user with a low skill level who cannot start the above action in response to the announcement. With the device 100 of the second arrangement, it is possible to control the guidance so as to change the announcement to a more specific instruction or to change the way of handling such as to send a person in charge, to the user who is not carrying out the behavior the user is expected to take as a response to the announcement. Consequently, with the device 100 of the second arrangement, it is possible to prevent the guidance that may place a psychological burden on the user.

### Third Arrangement

Next, a third arrangement will be described. In the third arrangement, the same description as that in the first arrangement will be omitted, and different points from the first arrangement will be described. In the third arrangement, the skill level is further determined based on the usage history of the user.

The first difference of the third arrangement from the first arrangement is that the device 100 reads out the user information of the user. The second difference of the third arrangement from the first arrangement is that the device 100 stores the usage history of the user.

### Example of Hardware Configuration

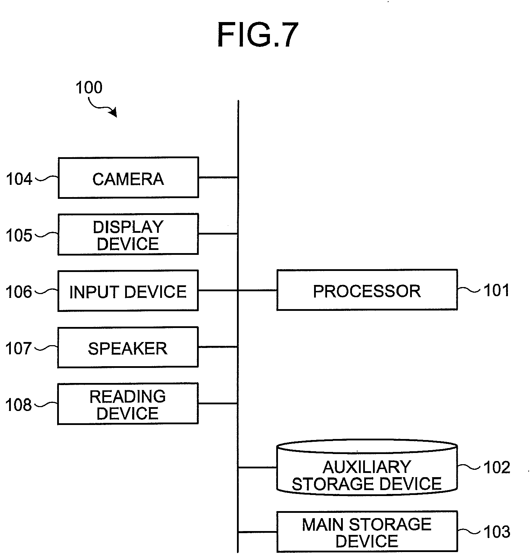

FIG. 7 is a diagram illustrating an example of a hardware configuration of the device 100 of the third arrangement. The device 100 of the third arrangement includes the processor 101, the auxiliary storage device 102, the main storage device 103, the camera 104, the display device 105, the input device 106, the speaker 107, and a reading device 108. In the device 100 of the third arrangement, the reading device 108 is further added to the hardware configuration of the device 100 of the first arrangement.

The reading device 108 reads out the user information of the user. For example, the reading device 108 may be an IC card reader. The user information is information relating to the user. The user information at least includes user identification information for identifying the user.

The auxiliary storage device 102 further stores therein the usage history of the device 100 by the user. The usage history is recorded when the user uses the device 100. For example, the usage history may include the user identification information described above, time and date of use, skill level, and the like. The time and date of use is the time and date when the user has used the device 100. The skill level is the skill level determined when the user has used the device 100.

### Example of Functional Configuration

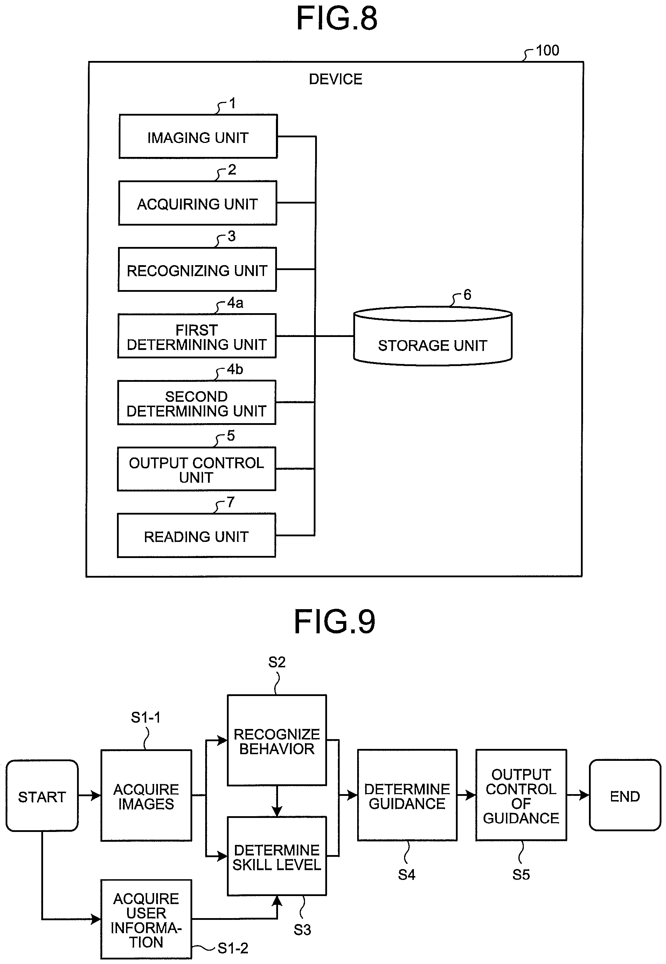

FIG. 8 is a diagram illustrating an example of a functional configuration of the device 100 of the third arrangement. The device 100 of the third arrangement includes the imaging unit 1, the acquiring unit 2, the recognizing unit 3, the first determining unit 4a, the second determining unit 4b, the output control unit 5, the storage unit 6, and a reading unit 7. In the device 100 of the third arrangement, the reading unit 7 is further added to the functional configuration of the device 100 of the first arrangement.

The reading unit 7 reads out the user information described above. For example, the reading unit 7 may be implemented by the reading device 108. The storage unit 6 further stores therein the usage history described above.

### Example of Operational Method

Next, the operation performed by the device of the third arrangement will be described in detail with reference to a flowchart.

FIG. 9 is a flowchart illustrating an operational example of the device 100 of the third arrangement. First, the acquiring unit 2 acquires the images taken by the imaging unit 1 (step S1-1).

Next, the reading unit 7 reads out the user information described above (step S1-2).

Next, the recognizing unit 3 recognizes the user's behavior from the images acquired through the process at step S1-1 (step S2).

Next, the first determining unit 4a determines the skill level of the user, from at least one of the images acquired through the process at step S1-1, the user information read out through the process at step S1-2, and the behavior and the series of behaviors that are recognized through the process at step S2 (step S3).

### Example of Determining Skill Level

The method of determining the skill level may be any method. Hereinafter, an example of the method of determining the skill level will be described.

For example, the first determining unit 4a determines the skill level of the user at the start of use, by the skill level read out from the usage history, using the user identification information included in the user information.

Moreover, for example, when the skill level is read out from the usage history, the first determining unit 4a determines the skill level of the user to be the skill level read out from the usage history. When the skill level cannot be read out from the usage history, the first determining unit 4a determines the skill level of the user, from at least one of the images acquired through the process at step S1-1, and the behavior and the series of behaviors that are recognized through the process at step S2.

Moreover, for example, the first determining unit 4a determines the skill level based on the skill level read out from the usage history, and the skill level that is determined from at least one of the images acquired through the process at step S1-1 and the behavior and the series of behaviors that are recognized through the process at step S2. In this case, the first determining unit 4a may reflect the skill level read out from the usage history in determining the skill level, with a certain influence degree, or may attenuate the influence degree of the skill level that is read out from the usage history with the time series.

The skill level determined through the process at step S3 is stored in the usage history of the storage unit 6, at the point when the user has completed a series of operations.

Because the processes at step S4 and step S5 are the same as those in the operational method of the device 100 in the first arrangement (see FIG. 3), the explanation thereof will be omitted.

As described above, in the device 100 of the arrangement, the storage unit 6 stores therein the usage history of the device 100 by the user. The first determining unit 4a then further determines the skill level of the user based on the usage history.

Hence, with the device 100 of the third arrangement, it is possible to use the skill level of the user that is determined when the device 100 is last used by the user. Consequently, it is possible to appropriately control the guidance, even if the user is not operating the device 100 such as at the start of use. In other words, with the device 100 of the third arrangement, it is possible to prevent the guidance that may place a psychological burden on the user.

The user information described above may also include the identification information for identifying the user and the skill level of the user. In this case, for example, when the user information is read out through the reading unit 7, the first determining unit 4a determines the skill level of the user from the skill level included in the user information.

For example, the device 100 of the first to third arrangements described above may be implemented by a computer including a general-purpose processor 101. In other words, all or a part of functions that can be implemented by a computer program, among the functions of the device 100 described above (see FIG. 2, FIG. 4, and FIG. 8) may be implemented by causing the general-purpose processor 101 to execute the computer program.

The computer program executed by the device 100 of the first to third arrangements is provided as a computer program product by being recorded in a computer-readable recording medium such as a compact disc-read only memory (CD-ROM), a memory card, a compact disc-recordable (CD-R), and a digital versatile disc (DVD) in an installable or executable file format.

The computer program executed by the device 100 of the first to third arrangements may also be stored in a computer connected to a network such as the Internet, and provided by being downloaded via the network. The computer program executed by the device 100 of the first to third arrangements may also be provided via a network such as the Internet without being downloaded.

The computer program executed by the device 100 of the first to third arrangements may also be provided by incorporating the computer program into a read-only memory (ROM) and the like in advance.

A part of the functions of the device 100 of the first to third arrangements may be implemented by hardware such as the IC. For example, the IC may be a dedicated processor 101 that executes a predetermined process.

The device 100 may also include a plurality of the processors 101. When the processors 101 are used to implement the functions, each of the processors 101 may implement one of the functions or may implement two or more of the functions.

The operational mode of the device 100 of the first to third arrangements may be any mode. For example, the functions of the device 100 of the first to third arrangements may be operated as a cloud system on the network.

While certain arrangements have been described, these arrangements have been presented by way of example only, and are not intended to limit the scope of the claims. Indeed, the devices described herein may be embodied in a variety of other forms; furthermore, various omissions, substitutions and changes in the form of the devices described herein may be made.
Example 1. A device include an output control unit. When time taken by a user to carry out first behavior is equal to or more than a first threshold, or when number of times the first behavior is repeated is equal to or more than a second threshold, the output control unit outputs first guidance to lead the user to first expected behavior that is behavior the user is expected to carry out subsequent to the first behavior. When the time taken to carry out the first behavior is less than the first threshold, or when the number of times the first behavior is repeated is less than the second threshold, the output control unit omits the first guidance to lead the user to the first expected behavior or output second guidance that is simpler than the first guidance.
Example 2. A device includes a determining unit and an output control unit. The determining unit is configured to determine a skill level of a user from first behavior of the user. When the skill level is less than a third threshold, the output control unit outputs first guidance to lead the user to first expected behavior that is behavior the user is expected to carry out subsequent to the first behavior. When the skill level is equal to or more than the third threshold, the output control unit omits the first guidance to lead the user to the first expected behavior or output second guidance that is simpler than the first guidance.
Example 3. In the device according to Example 2, when time taken to carry out the first behavior is equal to or more than a first threshold, or when number of times the first behavior is repeated is equal to or more than a second threshold, the determining unit determines the skill level to have a value less than the third threshold.
Example 4. The device according to Example 2 further includes a recognizing unit configured to recognize the first behavior of the user.
Example 5. In the device according to Example 4, the recognizing unit further recognizes second behavior carried out by the user subsequent to the first behavior. The determining unit determines the skill level to have a smaller value with an increase in time between the first behavior and the second behavior. The output control unit outputs third guidance to lead the user to second expected behavior that is behavior the user is expected to carry out subsequent to the second behavior, when the skill level is less than the third threshold; and omits the third guidance to lead the user to the second expected behavior, or changes to fourth guidance that is simpler than the third guidance, when the skill level is equal to or more than the third threshold.
Example 6. In the device according to Example 5, the determining unit determines the skill level to have a smaller value, with an increase in a deviation between the first expected behavior and the second behavior.
Example 7. In the device according to Example 2, when the skill level is equal to or less than a fourth threshold, the output control unit notifies another device that the device is used by a user with a low skill level.
Example 8. In the device according to Example 4, the recognizing unit recognizes the first behavior based on at least one of an image including the user and an operational input by the user.
Example 9. The device according to Example 2 further includes a reading unit configured to read out user information including identification information for identifying the user and the skill level of the user. The determining unit determines the skill level of the user based on the skill level included in the user information, when the reading unit reads out the user information.
Example 10. The device according to Example 2 further includes a storage unit configured to store therein usage history of the device by the user. The determining unit further determines the skill level of the user based on the usage history.
Example 11. A control method includes, when time taken by a user to carry out first behavior is equal to or more than a first threshold, or when number of times the first behavior is repeated is equal to or more than a second threshold, outputting first guidance to lead the user to first expected behavior that is behavior the user is expected to carry out subsequent to the first behavior; and when the time taken to carry out the first behavior is less than the first threshold, or when the number of times the first behavior is repeated is less than the second threshold, omitting the first guidance to lead the user to the first expected behavior or outputting second guidance that is simpler than the first guidance.
Example 12. A control method includes determining a skill level of a user from first behavior of the user; when the skill level is less than a third threshold, outputting first guidance to lead the user to first expected behavior that is behavior the user is expected to carry out subsequent to the first behavior; and when the skill level is equal to or more than the third threshold, omitting the first guidance to lead the user to the first expected behavior or outputting second guidance that is simpler than the first guidance.
Example 13. In the method according to Example 12, when time taken to carry out the first behavior is equal to or more than a first threshold, or when number of times the first behavior is repeated is equal to or more than a second threshold, the determining includes determining the skill level to have a value less than the third threshold.
Example 14. The method according to Example further includes recognizing the first behavior of the user.
Example 15. In the method according to Example 14, the recognizing further includes recognizing second behavior carried out by the user subsequent to the first behavior. The determining includes determining the skill level to have a smaller value with an increase in time between the first behavior and the second behavior. The outputting includes outputting third guidance to lead the user to second expected behavior that is behavior the user is expected to carry out subsequent to the second behavior, when the skill level is less than the third threshold; and omitting the third guidance to lead the user to the second expected behavior, or changing to fourth guidance that is simpler than the third guidance, when the skill level is equal to or more than the third threshold.
Example 16. In the method according to Example 15, the determining includes determining the skill level to have a smaller value, with an increase in a deviation between the first expected behavior and the second behavior.
Example 17. The method according to Example 12 further includes notifying another device that a device is used by a user with a low skill level when the skill level is equal to or less than a fourth threshold.
Example 18. In the method according to Example 14, the recognizing includes recognizing the first behavior based on at least one of an image including the user and an operational input by the user.
Example 19. The method according to Example 12 further includes reading out user information including identification information for identifying the user and the skill level of the user. The determining includes determining the skill level of the user based on the skill level included in the user information, when the reading out reads out the user information.
Example 20. The method according to Example 12 further includes storing usage history of a device by the user in a memory. The determining includes determining the skill level of the user based on the usage history.
Example 21. A computer program causes a computer to function as an output control unit. When time taken by a user to carry out first behavior is equal to or more than a first threshold, or when number of times the first behavior is repeated is equal to or more than a second threshold, the output control unit outputs first guidance to lead the user to first expected behavior that is behavior the user is expected to carry out subsequent to the first behavior. When the time taken to carry out the first behavior is less than the first threshold, or when the number of times the first behavior is repeated is less than the second threshold, the output control unit omits the first guidance to lead the user to the first expected behavior or output second guidance that is simpler than the first guidance.
Example 22. A computer program causes a computer to function as a determining unit and an output control unit. The determining unit determines a skill level of a user from first behavior of the user. When the skill level is less than a third threshold, the control output unit outputs first guidance to lead the user to first expected behavior that is behavior the user is expected to carry out subsequent to the first behavior. When the skill level is equal to or more than the third threshold, the output control unit omits the first guidance to lead the user to the first expected behavior or output second guidance that is simpler than the first guidance.

## Claims

1. A device (100), comprising:
an output control unit (5) configured to
when time taken by a user to carry out first behavior is equal to or more than a first threshold, or when number of times the first behavior is repeated is equal to or more than a second threshold, output first guidance to lead the user to first expected behavior that is behavior the user is expected to carry out subsequent to the first behavior; and
when the time taken to carry out the first behavior is less than the first threshold, or when the number of times the first behavior is repeated is less than the second threshold, omit the first guidance to lead the user to the first expected behavior or output second guidance that is simpler than the first guidance.

2. A device (100), comprising:
a determining unit (4) configured to determine a skill level of a user from first behavior of the user; and
an output control unit (5) configured to
when the skill level is less than a third threshold, output first guidance to lead the user to first expected behavior that is behavior the user is expected to carry out subsequent to the first behavior, and
when the skill level is equal to or more than the third threshold, omit the first guidance to lead the user to the first expected behavior or output second guidance that is simpler than the first guidance.

3. The device (100) according to claim 2, wherein when time taken to carry out the first behavior is equal to or more than a first threshold, or when number of times the first behavior is repeated is equal to or more than a second threshold, the determining unit (4) determines the skill level to have a value less than the third threshold.

4. The device (100) according to claim 2 or 3, further comprising a recognizing unit (3) configured to recognize the first behavior of the user.

5. The device (100) according to claim 4, wherein
the recognizing unit (3) further recognizes second behavior carried out by the user subsequent to the first behavior;
the determining unit (4) determines the skill level to have a smaller value with an increase in time between the first behavior and the second behavior; and
the output control unit (5) outputs third guidance to lead the user to second expected behavior that is behavior the user is expected to carry out subsequent to the second behavior, when the skill level is less than the third threshold; and omits the third guidance to lead the user to the second expected behavior, or changes to fourth guidance that is simpler than the third guidance, when the skill level is equal to or more than the third threshold.

6. The device (100) according to claim 5, wherein the determining unit (4) determines the skill level to have a smaller value, with an increase in a deviation between the first expected behavior and the second behavior.

7. The device (100) according to any one claims 2 to 6, wherein when the skill level is equal to or less than a fourth threshold, the output control unit (5) notifies another device that the device is used by a user with a low skill level.

8. The device (100) according to any one claims 4 to 6, wherein the recognizing unit (3) recognizes the first behavior based on at least one of an image including the user and an operational input by the user.

9. The device (100) according to any one claims 2 to 8, further comprising a reading unit (7) configured to read out user information including identification information for identifying the user and the skill level of the user, wherein
the determining unit (4) determines the skill level of the user based on the skill level included in the user information, when the reading unit (7) reads out the user information.

10. The device (100) according to any one claims 2 to 9, further comprising a storage unit (6) configured to store therein usage history of the device by the user, wherein
the determining unit (4) further determines the skill level of the user based on the usage history.

11. A control method, comprising:
when time taken by a user to carry out first behavior is equal to or more than a first threshold, or when number of times the first behavior is repeated is equal to or more than a second threshold, outputting first guidance to lead the user to first expected behavior that is behavior the user is expected to carry out subsequent to the first behavior; and
when the time taken to carry out the first behavior is less than the first threshold, or when the number of times the first behavior is repeated is less than the second threshold, omitting the first guidance to lead the user to the first expected behavior or outputting second guidance that is simpler than the first guidance.

12. A control method, comprising:
determining a skill level of a user from first behavior of the user;
when the skill level is less than a third threshold, outputting first guidance to lead the user to first expected behavior that is behavior the user is expected to carry out subsequent to the first behavior; and
when the skill level is equal to or more than the third threshold, omitting the first guidance to lead the user to the first expected behavior or outputting second guidance that is simpler than the first guidance.

13. The method according to claim 12, wherein when time taken to carry out the first behavior is equal to or more than a first threshold, or when number of times the first behavior is repeated is equal to or more than a second threshold, the determining includes determining the skill level to have a value less than the third threshold.

14. The method according to claim 12 or 13, further comprising recognizing the first behavior of the user.

15. The method according to claim 14, wherein
the recognizing further includes recognizing second behavior carried out by the user subsequent to the first behavior;
the determining includes determining the skill level to have a smaller value with an increase in time between the first behavior and the second behavior; and
the outputting includes outputting third guidance to lead the user to second expected behavior that is behavior the user is expected to carry out subsequent to the second behavior, when the skill level is less than the third threshold; and omitting the third guidance to lead the user to the second expected behavior, or changing to fourth guidance that is simpler than the third guidance, when the skill level is equal to or more than the third threshold.
